# EUROPEAN PATENT SPECIFICATION

(11) **EP 2 704 292 B1**
(45) Date of publication and mention of the grant of the patent: **05.04.2017**
(21) Application number: 12777602.9
(22) Date of filing: 25.04.2012
(51) Int. Cl.: B60L 5/00, B60L 11/18, B60M 7/00, H01F 38/14, H02J 5/00, H02J 7/02, H02J 50/12

(54) **FEED APPARATUS, CURRENT COLLECTOR, AND POWER TRANSFER APPARATUS OF THE MAGNETIC INDUCTION TYPE, CONSIDERING LATERAL DEVIATION**
EINSPEISEVORRICHTUNG, STROMKOLLEKTOR UND STROMÜBERTRAGUNGSVORRICHTUNG MIT MAGNETISCHER INDUKTION UNTER BERÜCKSICHTIGUNG VON SEITENABWEICHUNGEN
APPAREIL D'ALIMENTATION, COLLECTEUR DE COURANT, ET APPAREIL DE TRANSFERT DE PUISSANCE PAR INDUCTION MAGNÉTIQUE, PRENANT EN COMPTE UN ÉCART LATÉRAL

(30) Priority: 26.04.2011 KR 20110039206
(43) Date of publication of application: 05.03.2014
(73) Proprietor: Korea Advanced Institute Of Science And Technology, Daejeon 305-701 (KR)
(72) Inventor: JEON, Seong Jeub, Busan 612-750 (KR); SONG, Bo Yun, Seoul 156-856 (KR); SHIN, Jae Gue, Daejeon 305-807 (KR); SON, Sung Jun, Jeonju-si Jeonrabuk-do 561-223 (KR)
(74) Representative: Nederlandsch Octrooibureau
(86) International application number: PCT/KR2012/003181
(87) International publication number: WO 2012/148164

(56) References cited:
- EP-A2- 0 289 868
- WO-A2-2011/034393
- WO-A2-2011/046414
- JP-A- 2003 143 711
- JP-A- 2008 120 239
- JP-A- 2010 022 183
- KR-A- 20050 106 313
- KR-A- 20110 041 755
- KR-B1- 100 944 113
- SU-A1- 889 498
- SUNGWOO LEE ET AL: "On-Line Electric Vehicle using inductive power transfer system", ENERGY CONVERSION CONGRESS AND EXPOSITION (ECCE), 2010 IEEE, IEEE, PISCATAWAY, NJ, USA, 12 September 2010 (2010-09-12), pages 1598-1601, XP031787303, ISBN: 978-1-4244-5286-6
- SEUNGYOUNG AHN ET AL: "Low frequency electromagnetic field reduction techniques for the On-Line Electric Vehicle (OLEV)", ELECTROMAGNETIC COMPATIBILITY (EMC), 2010 IEEE INTERNATIONAL SYMPOSIUM ON, IEEE, 25 July 2010 (2010-07-25), pages 625-630, XP031978585, DOI: 10.1109/ISEMC.2010.5711349 ISBN: 978-1-4244-6305-3

## Description

### Technical Field

The present invention relates to a current feed apparatus, a current collecting apparatus, and a power transmission apparatus of a magnetic induction type, considering lateral deviation, and more particularly, to a current feed apparatus, a current collecting apparatus, and a power transmission apparatus of a magnetic induction type, considering lateral deviation, capable of efficiently supplying power necessary for operation of a moving medium such as an electric car even when the moving medium, which is supplied with the power through recharging during running on a road, is deviated from a feed line embedded in the road by a predetermined distance to the left or the right.

### Background Art

Elements described herein only provide background information related to the embodiment of the present invention rather than constituting a conventional art.

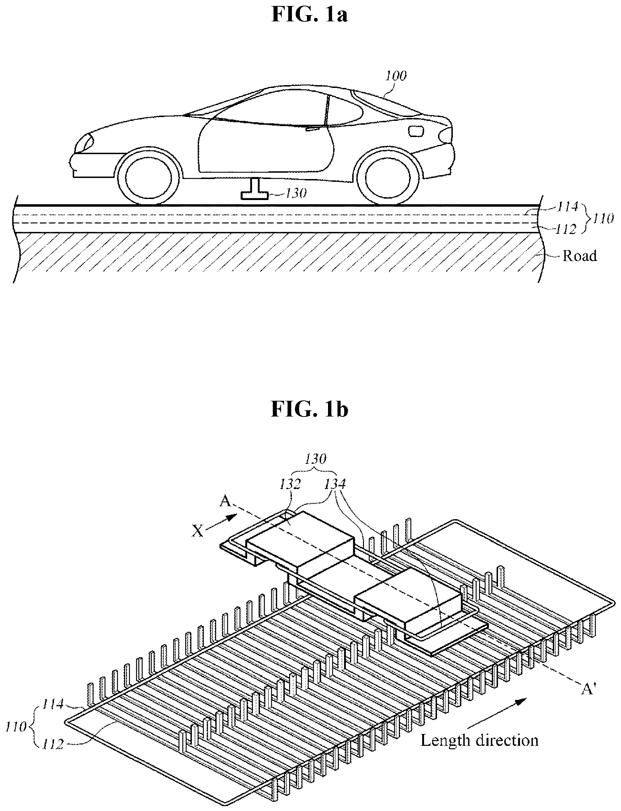

FIG. 1a shows an electric car running on a road while being supplied with power through a feed line embedded in the road. FIG. 1b simply shows a feed core, a feed line, and a current collecting apparatus necessary for power transmission, excluding the electric car and the road of FIG. 1a.

As shown in FIGS. 1a and 1b, when a high frequency power is supplied to a feed line 114 disposed at an upper part of a feed core 112 while an electric car 100 is running on the road, the electric car 100 is supplied with power necessary for running according to the electromagnetic induction principle operating between the current feed apparatus 110 that includes the feed core 112 and the feed line 114 and the current collecting apparatus 130.

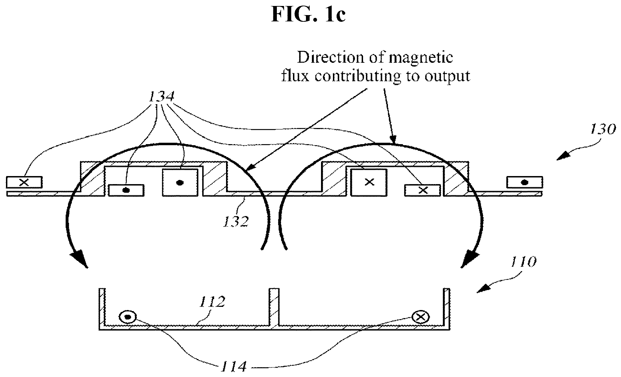

FIG. 1c shows a cross section of FIG. 1b cut along a line A-A', seen from an X direction.

In FIG. 1c, reference numerals are not shown in detail to mainly show a magnetic field. A description of FIG. 1c will be made with reference to the reference numerals of FIG. 1b.

A magnetic flux is generated by the feed line 114 in an arrowed direction as shown in FIG. 1c, thereby generating an induced electromotive force at the current collecting line 134.

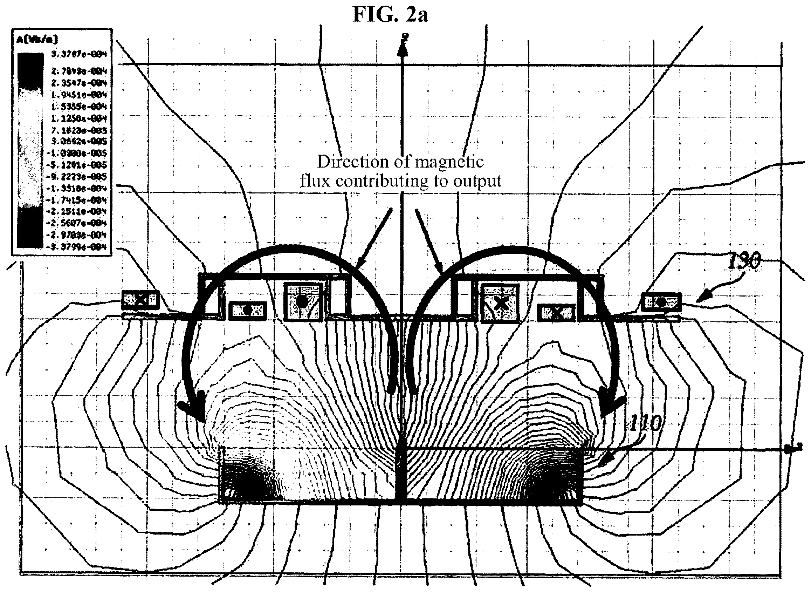

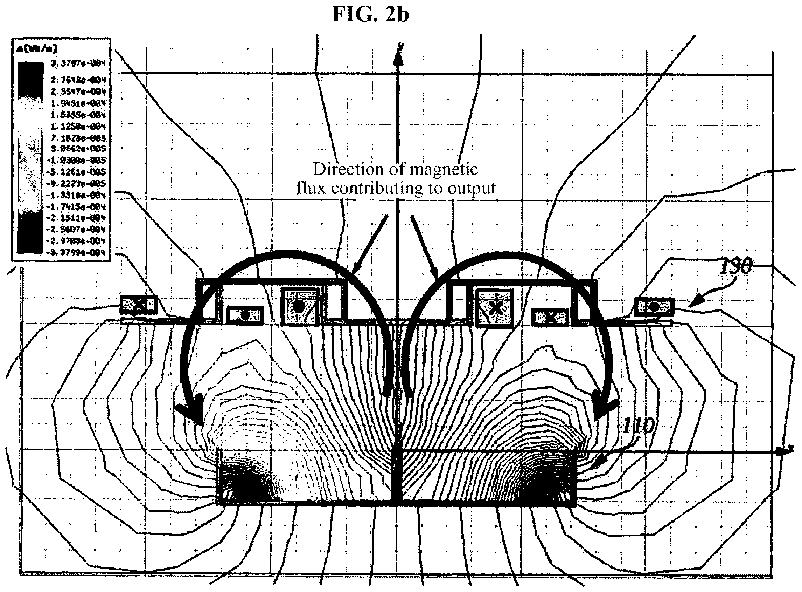

FIG. 2 shows a magnetic field generated according to relations among the feed core 112, the feed line 114, and the current collecting apparatus 130 of FIG. 1c.

(A) of FIG. 2 shows arrangement of the feed core 112, the feed line 114, and the current collecting apparatus 130 and a magnetic field generated in a case in which the electric car 100 runs on the road such that the current collecting apparatus 130 of the electric car 100 is disposed at an upper part of a middle of the feed core 112 and the feed line 114 embedded in the road, that is, when the current collecting apparatus 130 is disposed in a correct position, to be supplied with maximum power. (B) of FIG. 2 shows arrangement of the feed core 112, the feed line 114, and the current collecting apparatus 130 and a magnetic field generated in a case in which the current collecting apparatus 130 is deviated by a predetermined distance to the left or the right from the middle of the feed core 112 and the feed line 114, that is, when the current collecting apparatus 130 is misaligned.

When the current collecting apparatus 130 is disposed at the upper part of the middle of the current feed apparatus 110 during running of the electric car 100 as shown in (A) of FIG. 2, output of the induced electromotive force may be generated in a normal amount at a current collecting line 134 coiled on a current collecting core 132. An arrow shown as a semicircle in (A) of FIG. 2 conceptually denotes a direction of the magnetic field contributing to the induced electromotive force of the current collecting apparatus 130.

In the case of (B) of FIG. 2, when the electric car 100 runs so that a misalignment distance of the current collecting apparatus 130 becomes a predetermined distance or more, a magnetic flux not contributing to the induced electromotive force is increased and, furthermore, a magnetic flux of an opposite direction to the magnetic flux contributing to the induced electromotive force is increased. As a result, power transmission from the current feed apparatus 110 to the current collecting 130 may not be favorably performed.

Another example of feed line configuration is given in the following article: Seungyoung Ahn & al., "Low Frequency Electromagnetic Field Reduction Techniques for the On-Line Electric Vehicle (OLEV)", 2010 IEEE International Symposium on Electromagnetic Compatibility, 625-630.

### Disclosure of Invention

### Technical Goals

An object of the present invention is to solve the above problems and to efficiently supply power necessary for operation of a moving medium such as an electric car even when a current collecting apparatus mounted to the moving medium supplied with the power through recharging during running on a road is deviated from a feed line embedded in the road by a predetermined distance to the left or the right.

In addition, another object of the present invention is to considerably reduce a use amount of a core while not much reducing power transmission efficiency, by providing a cut unit to a feed core.

### Technical solutions

The technical solution is achieved by the current feed apparatus of Claim 1.

According to an aspect of the present invention, there is provided a current feed apparatus including a feed core including a main feed unit having a predetermined width and length, feed projection units projected from a cross section of the main feed unit, which is perpendicular to both a width direction and a length direction of the main feed unit, at a left end and a right end of the width direction in a same direction, and a middle projection unit projected in the same direction as the feed projection units in a middle of a width direction of the main feed unit accordingly being formed into an E shape, and a pair of feed lines wound on a left end and a right end of the main feed unit.

The feed lines are wound adjacent to the feed projection units.

The feed core may include a plurality of cut units parallel with the width direction and therefore the feed core is divided into a plurality of core pieces.

A thickness of the cut units of the feed core may be greater than a thickness of the core pieces.

According to another aspect of the present invention, there is provided a current collecting apparatus including a collecting core including a main collecting unit having a predetermined width and length, and collecting projection units projected from a cross section of the main feed unit, which is perpendicular to both a width direction and a length direction of the main collecting unit in the same direction at a left end and a right end of the width direction, thereby being formed into an inverted U shape, and a collecting line wound on the collecting core.

The collecting line may be wound on the collecting projection units projected at the left end and the right end.

The collecting core may include extension units extended in the width direction from ends of the collecting projection units projected at the left and the right end.

The current collecting apparatus may be mounted to a lower part of a car.

According to another aspect of the present invention, there is provided a power transmission unit including the current feed apparatus according to any one of claim 1 to claim 3, and the current collecting apparatus according to any one of claim 4 to claim 7, wherein the feed projection units and the collecting projection units are projected to face each other.

### Effects

As described above, according to an embodiment of the present invention, when a moving medium such as an electric car, which is supplied with power necessary for operation through recharging during running on a road, is deviated from a feed line embedded in the road by a predetermined distance to the left or the right, the power necessary for operation may be efficiently supplied.

In addition, since a feed core is provided with a cut unit, a use amount of a core may be considerably reduced while power transmission efficiency is not much reduced.

### Brief Description of Drawings

FIG. 1a is a diagram showing an electric car running on a road while being supplied with power through a feed line embedded in the road;
FIG. 1b is a simplified diagram showing a feed core, a feed line, and a current collecting apparatus necessary for power transmission, excluding the electric car and the road of FIG. 1a;
FIG. 1c is a diagram of a cross section of FIG. 1b cut along a line A-A', seen from an X direction;
FIG. 2 is a diagram showing a magnetic field generated according to relations among the feed core, the feed line, and the current collecting apparatus of FIG. 1c;
FIG. 3a is a diagram of a power transmission apparatus according to a first embodiment of the present invention;
FIG. 3b is a diagram of a feed core integrally formed in an inverted U shape without a cut unit, and a feed core integrally formed in an E shape without a cut unit.
FIG. 4 is a diagram of a cross section of FIG. 3a cut along a line A-A', seen from an X direction;
FIG. 5 is a diagram showing a magnetic field generated in the power transmission apparatus shown in FIGS. 3a and 4;
FIG. 6 is a diagram of a power transmission apparatus according to a second embodiment of the present invention;
FIG. 7 is a diagram of a cross section of FIG. 6 cut along a line A-A', seen from an X direction; and
FIG. 8 is a diagram showing a magnetic field generated in the power transmission apparatus shown in FIGS. 6 and 7.

### Best Mode for Currying Out the Invention

Reference will now be made in detail to embodiments of the present invention, examples of which are illustrated in the accompanying drawings, wherein like reference numerals refer to the like elements throughout. The embodiments are described below in order to explain the present invention by referring to the figures. However, in explaining the embodiments of the present invention, generally known functions and structures will not be explained in detail for conciseness.

In addition, in describing elements of the present invention, terms such as "first," "second," "A," "B," "(a)," and "(b)" may be used. Since those terms are used only to distinguish the corresponding elements from others, attributes or orders of the elements are not limited by those terms. In the specification, it will be understood that when an element is referred to as being "connected" or "coupled" to another element, it can be directly connected or coupled to the other element, or intervening elements may also be present.

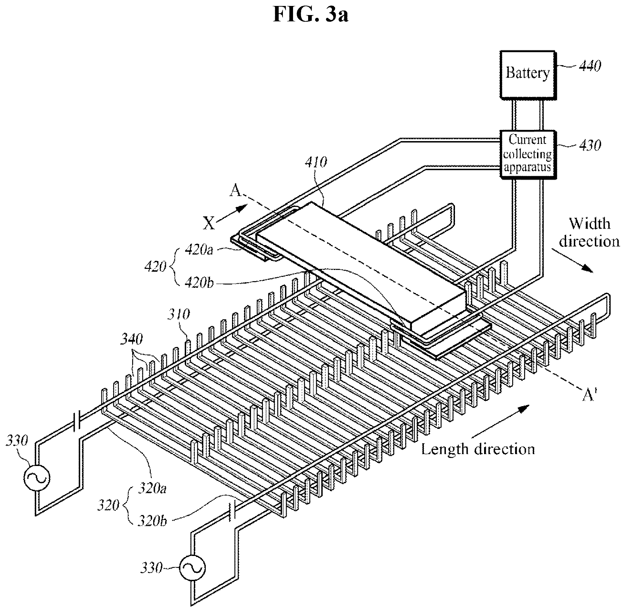

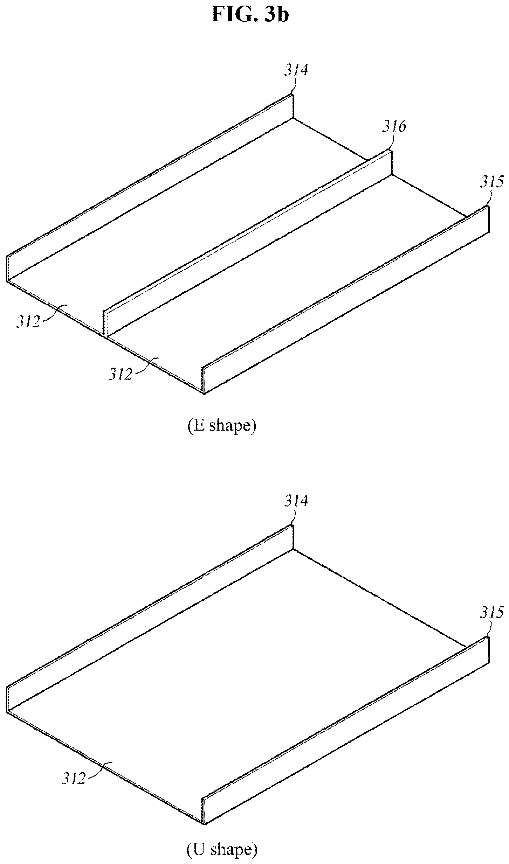

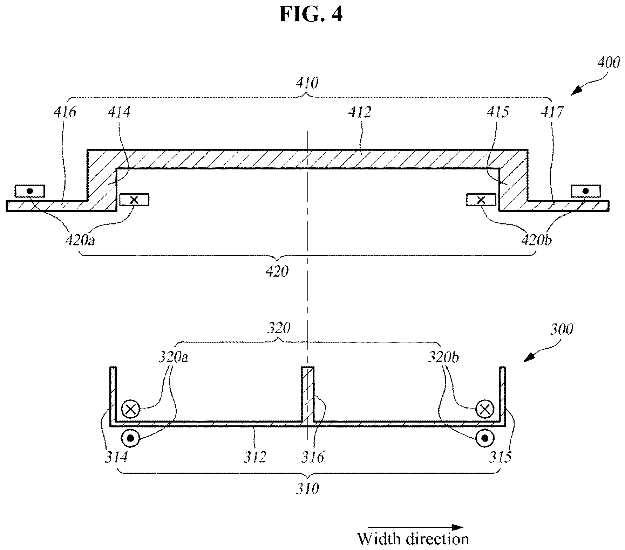

FIG. 3a is a diagram of a power transmission apparatus according to a first embodiment of the present invention. FIG. 4 is a diagram of a cross section of FIG. 3a cut along a line A-A', seen from an X direction. FIG. 3b is a diagram of a feed core integrally formed in an inverted U shape without a cut unit and a feed core integrally formed in an E shape without a cut unit.

The power transmission apparatus according to first embodiment of the present invention will now be described with reference to FIGS. 3a, 3b, and 4.

As shown in FIGS. 3a and 4, the power transmission apparatus includes a current feed apparatus 300 and a current collecting apparatus 400.

The current feed apparatus 300 according to the first embodiment may include a feed core 310, a feed line 320, and an input power 330. The current collecting apparatus 400 according to the first embodiment may include a collecting core 410, a collecting line 420, a collecting circuit 430, and a battery 440.

The feed core 310 may include a main feed unit 312 having a predetermined width and length, and feed projection units 314 and 315 projected from a cross section of the main feed unit 312, which is perpendicular to a length direction of the feed core 310, at a left end and a right end of a width direction of the feed core 310. The feed projection units 314 and 315 are perpendicular to both the width direction and the length direction of the feed core 310, so that the feed core 310 is formed into a U shape. Since the feed core 310 includes the feed projection units 314 and 315, the magnetic field may be easily transferred to the current collecting apparatus 400.

The feed core 310 further includes a middle projection unit 316 projected in the same direction as the feed projection units 314 and 315 in the middle of the width direction of the main feed unit 312, so that the feed core 310 is formed into an laid E shape. In this case, an entire amount of the magnetic field transferred to the current collecting apparatus 400 may be increased in comparison to when the feed core 310 is in the U shape.

A pair of feed lines 320 may be wound on a left end and a right end of the main feed unit 312.

A left feed line 320a is wound on the left end of the main feed unit 312 in the length direction of the feed core 310 to be adjacent to the left feed projection unit 314. A right feed line 320b is wound on the right end of the main feed unit 312 in the length direction of the feed core 310 to be adjacent to the right feed projection unit 315. Depending on cases, the pair of feed lines 320a and 320b may be wound on the left feed projection unit 314 and the right feed projection unit 315, respectively.

The feed core 310 may be integrally formed as shown in FIG. 3b, or may include a cut unit 340 as shown in FIG. 3a.

The feed core 310 may include a plurality of cut units 340 parallel with the width direction of the feed core 310. Therefore, the feed core 310 may be divided into a plurality of core pieces each in an E shape or a U shape.

Here, as shown in FIG. 3a, intervals between neighboring cut units 340 may be uniform. A thickness of the cut units 340 may be similar to or greater or smaller than a thickness of the core pieces in the E shape.

When the cut units 340 are provided at the feed core 310 as shown in FIG. 3a and the feed core 310 is formed with only a half capacity of the integral feed core 310 as shown in FIG. 3b, an output induced to the current collecting apparatus 400 may be reduced by about 10% in comparison to the case of FIG. 3a. However, since a capacity of a ferrite core used for the feed core 310 may be reduced almost to a half in this case, reduction in the output induced to the current collecting apparatus 400 is not greater than the reduced ferrite capacity. That is, economical efficiency is relatively high.

The collecting core 410 may include a main collecting unit 412 having a predetermined width and length, and collecting projection units 414 and 415 projected from the main collecting unit 412 in the same direction at a left end and a right end of a width direction of the collecting core 410. The collecting projection units 414 and 415 are projected perpendicular to both the width direction and the length direction of the collecting core 410, so that a cross section of the main collecting unit 412 perpendicular to the length direction of the collecting core 410 is an inverted U shape. Here, the collecting projection units 414 and 415 may be projected in an opposite direction to a projection direction of the feed projection units 314 and 315.

At ends of the collecting projection units 414 and 415, extension units 416 and 417 may be extended in the width direction of the collecting core 410, respectively. By including the extension units 416 and 417, the collecting projection units 414 and 415 may increase an effective sectional area on a magnetic path, thereby reducing a magnetic resistance.

The extension units may be extended outward from the collecting projection units 414 and 415 with respect to the main collecting unit 412 as indicated by reference numerals 416 and 417. The extension units 416 and 417 may additionally include a projection part projected in a direction from the collecting projection units 414 and 415 toward a center of the main collecting unit 412, that is, in an opposite direction to the reference numerals 416 and 417 with reference to the collecting projection units 414 and 415, with respect to the width direction of the collecting core 410.

The collecting line 420 may be wound on a left collecting projection unit 414 and a right collecting projection unit 415 of the collecting core 410, or on the main collecting unit 412.

When the input power 330 is applied to the feed line 320 of FIG. 3a, a magnetic field is generated at the feed line 320, and an induced electromotive force is generated at the collecting line 420, being induced from the magnetic field. Collecting lines 420a and 420b wound on the left and right collecting projection units 414 and 415 of the collecting core 410 may be connected parallel with the collecting circuit 430 to generate desired levels of voltage and charge the battery 440 connected to the collecting lines 420a and 420b. The collecting circuit 430 may include a rectifier and a regulator.

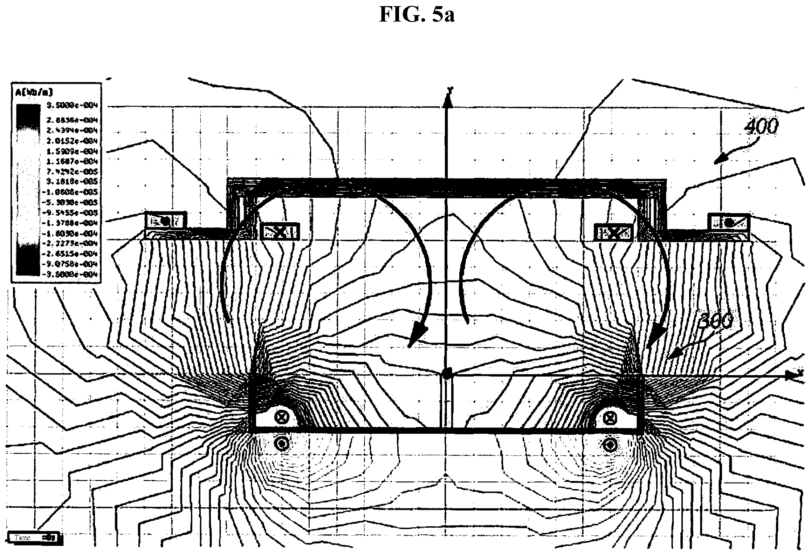

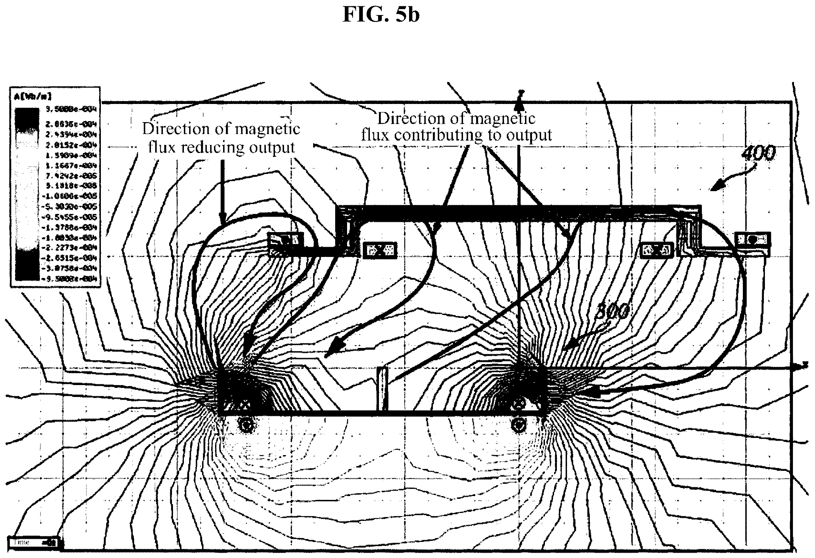

FIG. 5 is a diagram showing a magnetic field generated in the power transmission apparatus shown in FIGS. 3a and 4. Reference numerals are omitted from FIG. 5 to mainly describe the magnetic field. Reference numerals of FIG. 4 will be cited for a description of FIG. 5.
(A) of FIG. 5 shows a magnetic field generated when the current collecting apparatus 400 is disposed in a correct position, to be supplied with maximum power.
(B) of FIG. 5 shows a magnetic field generated when the current collecting apparatus 400 is misaligned.

When the current collecting apparatus 400 is in the correct position as in (A) of FIG. 5, output of the induced electromotive force may be generated at the collecting line 420 wound on the collecting core 410 in a normal amount. An arrow shown as a semicircle in (A) of FIG. 5 conceptually denotes a direction of a magnetic field contributing to the induced electromotive force of the current collecting apparatus 400.

When the current collecting apparatus 400 is misaligned as shown in (B) of FIG. 5, an amount of a magnetic flux not contributing to the induced electromotive force is increased but, however, an amount of a magnetic flux of an opposite direction to the magnetic flux contributing to the induced electromotive force is not great.

In the power transmission apparatus configured as in FIG. 2, an output of the collecting line 134 is simulated under conditions in which a width of the feed core 110 is 72 cm, a width of the current collecting apparatus 130 is 110 cm, and the current collecting apparatus 130 is disposed in the correct position as shown in (A) of FIG. 2. As a result of the simulation, when a sum of voltages generated at the collecting line 134 is 1651 V, when a misaligned distance of the current collecting apparatus 130 is 30 cm as in (B) of FIG. 2, a sum of voltages generated at the collecting line 134 becomes about 148 V. That is, the generated voltage is greatly reduced. Since an induced current is reduced according to reduction in the voltage induced to the current collecting apparatus 130, output induced to the current collecting apparatus 130 is abruptly reduced.

However, in the power transmission apparatus configured as in FIG. 5, when a sum of voltages generated at the collecting line 420 is 1726 V as a result of simulation under the same conditions as FIG. 2, in which the width of the feed core 310 is 72 cm and a width of the current collecting apparatus 400 is 110 cm, and when a misaligned distance of the current collecting apparatus 400 is 30 cm as in (B) of FIG. 2, a sum of voltages generated at the collecting line 420 becomes about 1559 V. That is, the generated voltage is not reduced by a large degree. Therefore, the power transmission apparatus of FIG. 5 is efficient than the power transmission apparatus of (B) of FIG. 2.

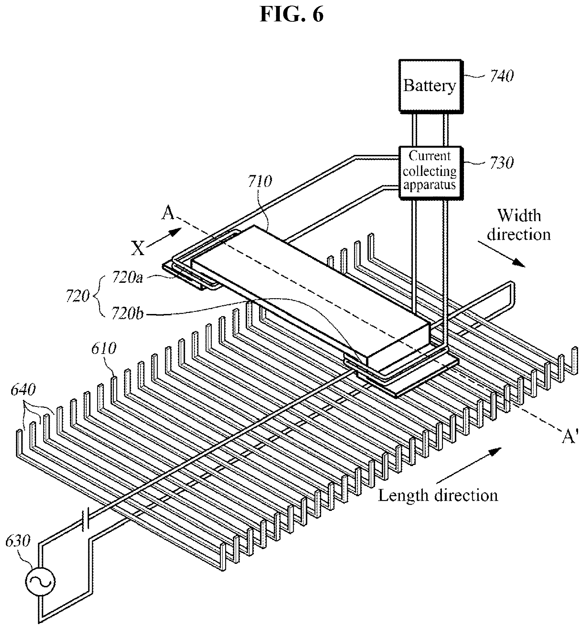

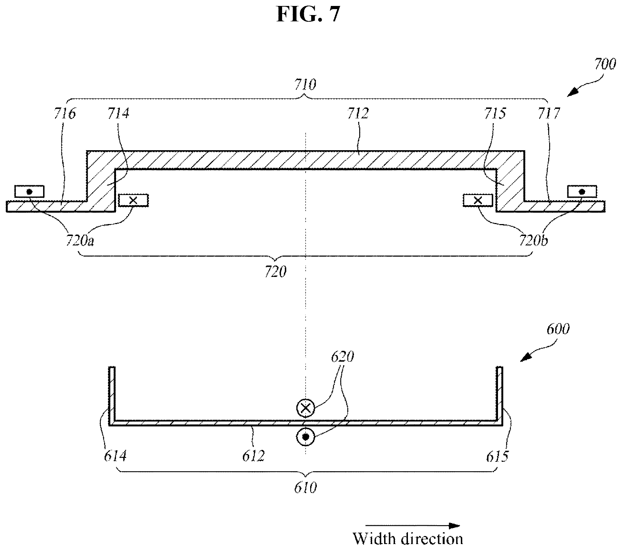

FIG. 6 is a diagram of a power transmission apparatus according to a second embodiment of the present invention. FIG. 7 is a diagram of a cross section of FIG. 6 cut along a line A-A', seen from an X direction

As shown in FIGS. 6 and 7, the power transmission apparatus according to the second embodiment includes a current feed apparatus 600 and a current collecting apparatus 700.

In FIGS. 6 and 7, since a feed core 610 is configured similar to the feed core 300 of FIGS. 3a and 4, a detailed description about the feed core 610 will be omitted.

A feed line 620 may be wound in a length direction of the feed core 610 in a middle of a main feed unit 612 with respect to a width direction of the main feed unit 612.

When an input power 630 is applied to the feed line 620 of FIG. 6, a magnetic field is generated at the feed line 620, and an induced electromotive force is generated at a collecting line 720, being induced from the magnetic field. Collecting lines 720a and 720b wound on the left and right collecting projection units 714 and 715 of the collecting core 710 may be connected parallel with the collecting circuit 730 to generate desired levels of voltage and to charge the battery 740 connected to the collecting lines 420a and 420b. Since configuration and function of the current collecting apparatus 600 are similar to those of the current collecting apparatus 400 of FIGS. 3a and 4, a detailed description will be omitted.

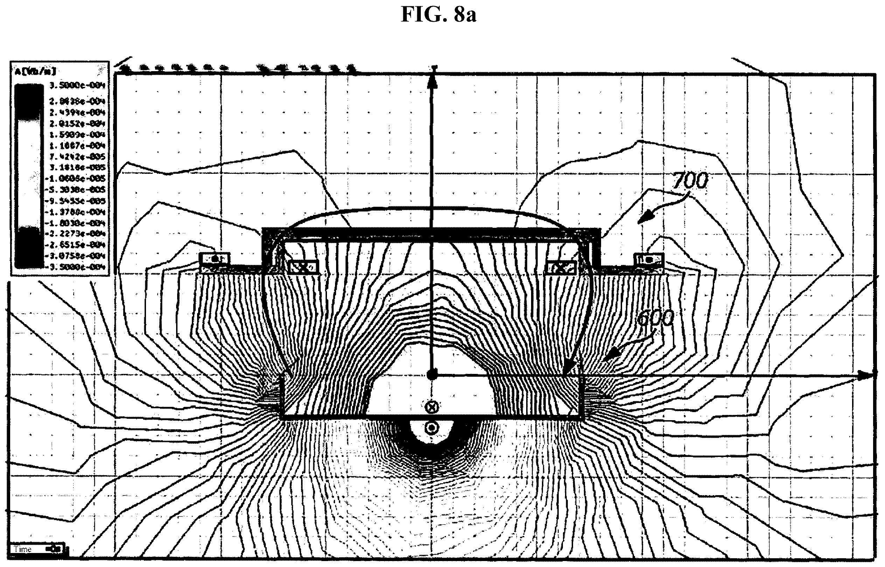

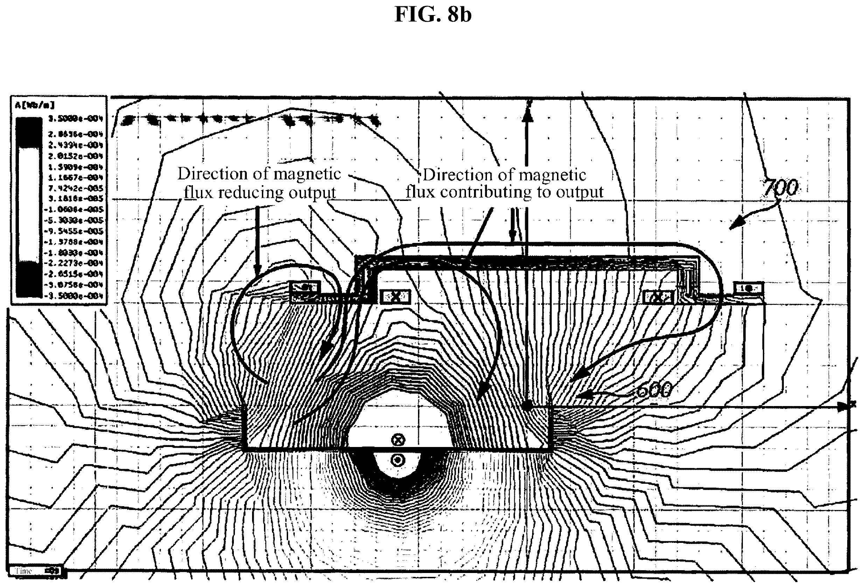

FIG. 8 is a diagram showing a magnetic field generated in the power transmission apparatus shown in FIGS. 6 and 7. Reference numerals are omitted from FIG. 7 to mainly describe the magnetic field. Reference numerals of FIG. 7 will be cited for a description of FIG. 8.

(A) of FIG. 8 shows a magnetic field generated when a middle of the current collecting apparatus 700 with respect to a width direction is disposed on an upper portion of a middle of the current feed apparatus 600 with respect to a width direction, that is, when the current collecting apparatus 700 is in a correct position to be supplied with maximum power. (B) of FIG. 8 shows a magnetic field generated when the current collecting apparatus 700 is misaligned.

When the current collecting apparatus 700 is in the correct position as shown in (A) of FIG. 8, output of the induced electromotive force may be generated at the collecting line 720 wound on the collecting core 710 in a normal amount. An arrow shown as a semicircle in (A) of FIG. 8 conceptually denotes a direction of a magnetic field contributing to the induced electromotive force of the current collecting apparatus 700.

When the current collecting apparatus 700 is misaligned as shown in (B) of FIG. 8, an amount of a magnetic flux not contributing to the induced electromotive force is increased but, however, an amount of a magnetic flux of an opposite direction to the magnetic flux contributing to the induced electromotive force is relatively low. Therefore, voltage reduction of the current collecting apparatus 130 may be smaller than when the current collecting apparatus 130 of FIG. 2 is misaligned.

For example, in the power transmission apparatus configured as in FIG. 8, when a voltage of about 2782 V is generated at the current collecting apparatus 700 under the same conditions as FIG. 5, in which the width of the feed core 610 is 72 cm, a width of the current collecting apparatus 700 is 110 cm, and the current collecting apparatus 700 is in the correct position as shown in (A) of FIG. 8, and when a misaligned distance of the current collecting apparatus 700 is 30 cm as in (B) of FIG. 8, a voltage generated of the current collecting apparatus 700 becomes about 1870 V. That is, the generated voltage is not reduced by a large degree. Therefore, the power transmission apparatus of FIG. 8 is efficient than the power transmission apparatus of (B) of FIG. 2.

In FIGS. 2, 5, and 8, output voltages of the induced electromotive force are compared between a case in which the current collecting apparatus 700 is in the correct position and a case in which the current collecting apparatus 700 is deviated by 30 cm, resulting in Table 1.

**[Table 1]**

| | Output voltage in correct position | Output voltage with 30 cm misalignment distance | Output voltage maintain ratio of misalignment with respect to correct position |
|---|---|---|---|
| FIG. 2 | 1651 V | 148 V | 9.0% |
| FIG. 5 | 2063 V | 1559 V | 75.9% |
| FIG. 8 | 2782 V | 1870 V | 67.2% |

As shown in Table 1, the output voltage maintain ratio of misalignment with respect to correct position is no more than 9.0 % in FIG. 2 and therefore it is difficult to efficiently generate the induced electromotive force at the current collecting apparatus. However, in FIGS. 5 and 8, the output voltage maintain ratios are 75.9 % and 67.2 %, respectively. That is, it is understood that a considerable level of the induced electromotive force is generated at the current collecting apparatus in spite of the misalignment of the current collecting apparatus.

In the foregoing, although the elements of the present invention have been described as being integrally coupled or operating integrally, the present invention is not limited to the embodiments. That is, within the scope of the invention, at least one of the elements may be selectively coupled and operated.

Furthermore, when it is described that one comprises (or includes or has) some elements, it should be understood that it may comprise (or include or has) only those elements, or it may comprise (or include or have) other elements as well as those elements if there is no specific limitation. Unless otherwise specifically defined herein, all terms including technical or scientific terms are to be given meanings understood by those skilled in the art. Like terms defined in dictionaries, generally used terms needs to be construed as meaning used in technical contexts and are not construed as ideal or excessively formal meanings unless otherwise clearly defined herein.

Embodiments described above only by way of example and are not to limit the scope of the invention. Those skilled in the art may use the methods and technical disclosure described herein to make various alternations and modifications to the disclosure without departing from the scope of the invention. Therefore, the above embodiments are only used for describing the technical concept of the invention rather than limiting the protection range of the invention, and all the equivalent changes shall be considered within the protection range of the invention.

### Industrial applicability

As described above, the present invention is effective since power necessary power necessary for operation of a moving medium such as an electric car is efficiently supplied even when the moving medium, which is supplied with the power through recharging during running on a road, is deviated from a feed line embedded in the road by a predetermined distance to the left or the right.

## Claims

1. A current feed apparatus comprising:
a feed core (310) including a main feed unit (312) having a predetermined width in a width direction and length in a length direction, feed projection units (314, 315, 316) projected from the main feed unit (312), which feed projection units are arranged perpendicular to both said width direction and said length direction of the main feed unit (312), and comprise a first feed projection unit (314) at a first, left, end of said main feed unit (312) and a second feed projection unit (315) at a second, right, end of said main feed unit (312; 612) as seen in the width direction, and a middle feed projection unit (316) arranged in a middle of the main feed unit (312) seen in said width direction and projecting in the same direction as the first and second feed projection units, said first end being opposite to said second end such that said main feed unit (312) and said first (314), second (315) and middle (316) feed projection units form an E shape; and
feed lines being wound on the feed core,
**characterized in that**
said feed lines comprising a pair of feed lines comprising a first, left, feed line (320a) and a second, right, feed line (320b), arranged such that
said first, left, feed line (320a) is wound on the first, left, end of the main feed unit (312) in the length direction of the feed core (310) adjacent to the first feed projection unit (314), and said second, right, feed line (320b) is wound on the second, right, end of the main feed unit (312) in the length direction of the feed core (310) adjacent to the second feed projection unit (315); and
said middle feed projection unit (316) having no feed line wound on it.

2. The current feed apparatus of claim 1, wherein the feed core comprises a plurality of cut units parallel with the width direction and therefore the feed core is divided into a plurality of core pieces.

3. The current feed apparatus of claim 2, wherein a thickness of the cut units of the feed core is greater than a thickness of the core pieces.

4. A power transmission system comprising:
the current feed apparatus according to any one of claim 1 to claim 3, and
a current collecting apparatus comprising:
a collecting core (410) including a main collecting unit (412) having a predetermined further width in a further width direction and a further length in a further length direction, and collecting projection units (414, 415) projecting in the same direction from the main collecting unit (412) perpendicular to both said further width direction and said further length direction of the main collecting unit (412) at a first, left, end and a second, right, end of the further width direction, such that the main collecting unit (412) and the collecting projection units (414, 415) form an inverted U shape; and
a collecting line wound on the collecting core.

5. The power transmission system of claim 4, wherein the collecting line is wound on the collecting projection units projected at the left end and the right end.

6. The power transmission system of claim 4, wherein the collecting core comprises respective extension units (416, 417) extending in the width direction from ends of the respective collecting projection units (414, 415).

7. The power transmission system of claim 4, wherein the current collecting apparatus is mounted to a lower part of a car.

## Patentansprüche

1. Stromzuführvorrichtung, die umfasst:
einen Speiseleiter (310) einschließlich einer Hauptzuführeinheit (312) mit einer vorbestimmten Breite in einer Breitenrichtung und Länge in einer Längenrichtung, Zuführansatzeinheiten (314, 315, 316), die von der Hauptzuführeinheit (312) vorspringen, wobei die Zuführansatzeinheiten senkrecht sowohl zu der Breitenrichtung als auch der Längenrichtung der Hauptzuführeinheit (312) angeordnet sind und eine erste Zuführansatzeinheit (314) an einem ersten linken Ende der Hauptzuführeinheit (312) und eine zweite Zuführansatzeinheit (315) an einem zweiten rechten Ende der Hauptzuführeinheit (312; 612), wie in der Breitenrichtung ersichtlich, aufweisen, und eine mittlere Zuführansatzeinheit (316), die in einer Mitte der Hauptzuführeinheit (312) in Breitenrichtung gesehen angeordnet ist und in der gleichen Richtung wie die erste und zweite Zuführansatzeinheit vorspringt, wobei das erste Ende dem zweiten Ende gegenüber liegt, so dass die Hauptzuführeinheit (312) und die erste (314), zweite (315) und mittlere (316) Zuführansatzeinheit eine E-Form bilden; und
Zuleitungen um den Speiseleiter gewickelt sind,
**dadurch gekennzeichnet, dass**
die Zuleitungen ein Paar von Zuleitungen umfassen, die eine erste linke Zuleitung (320a) und eine zweite rechte Zuleitung (320b) aufweisen, die so angeordnet sind, dass
die erste linke Zuleitung (320a) auf das erste linke Ende der Hauptzuführeinheit (312) in der Längenrichtung des Speiseleiters (310) angrenzend an die erste Zuführansatzeinheit (314) gewickelt ist; und die zweite rechte Zuleitung (320b) auf das zweite rechte Ende der Hauptzuführeinheit (312) in der Längenrichtung des Speiseleiters (310) angrenzend an die zweite Zuführansatzeinheit (315) gewickelt ist; und
auf der mittleren Zuführansatzeinheit (316) keine Zuleitung aufgewickelt ist.

2. Stromzuführvorrichtung nach Anspruch 1, wobei der Speiseleiter eine Vielzahl von geschnittenen Einheiten parallel zu der Breitenrichtung aufweist, und deshalb der Speiseleiter in eine Vielzahl von Kernstücken geteilt ist.

3. Stromzuführvorrichtung nach Anspruch 2, wobei eine Dicke der geschnittenen Einheiten des Speiseleiters größer ist als eine Dicke der Kernstücke.

4. Leistungsübertragungssystem, umfassend:
die Stromzuführvorrichtung nach einem von Anspruch 1 bis Anspruch 3, und eine Stromsammelvorrichtung, die einschließt:
einen Sammelleiter (410) mit einer Hauptsammeleinheit (412), die eine vorgegebene weitere Breite in einer weiteren Breitenrichtung und eine weitere Länge in einer weiteren Längenrichtung aufweist, und Sammelansatzeinheiten (414, 415), die in der gleichen Richtung von der Hauptsammeleinheit (412) senkrecht sowohl zu der weiteren Breitenrichtung als auch der weiteren Längenrichtung der Hauptsammeleinheit (412) an einem ersten linken Ende und einem zweiten rechten Ende der weiteren Breitenrichtung vorspringen, so dass die Hauptsammeleinheit (412) und die Sammelansatzeinheiten (414, 415) die Form eines umgekehrten U bilden; und
eine auf den Sammelleiter gewickelte Sammelleitung.

5. Leistungsübertragungssystem nach Anspruch 4, wobei die Sammelleitung auf die Sammelansatzeinheiten, die an dem linken Ende und dem rechten Ende vorspringen, gewickelt ist.

6. Leistungsübertragungssystem nach Anspruch 4, wobei der Sammelleiter jeweilige Verlängerungseinheiten (416, 417) aufweist, die sich in der Breitenrichtung von Enden der jeweiligen Sammelansatzeinheiten (414, 415) erstrecken.

7. Leistungsübertragungssystem nach Anspruch 4, wobei die Stromsammelvorrichtung an einem unteren Teil eines Autos angebracht ist.

## Revendications

1. Dispositif d'alimentation de courant comprenant :
un noyau d'alimentation (310) comprenant une unité d'alimentation principale (312) ayant une largeur prédéterminée dans une direction de la largeur et une longueur prédéterminée dans une direction de la longueur, des unités de saillies d'alimentation (314, 315, 316) en saillie à partir de l'unité d'alimentation principale (312), lesquelles unités de saillies d'alimentation sont agencées perpendiculairement à la fois à la direction de ladite largeur et la direction de ladite longueur de l'unité d'alimentation principale (312), et comprennent une première unité de saillies d'alimentation (314) au niveau d'une première extrémité, gauche, de ladite unité d'alimentation principale (312) et une seconde unité de saillies d'alimentation (315) au niveau d'une seconde extrémité, droite, de ladite unité d'alimentation principale (312 ; 612) vu dans la direction de la largeur, et une unité médiane de saillies d'alimentation (316) agencée au milieu de l'unité d'alimentation principale (312) vu dans ladite direction de la largeur et faisant saillie dans la même direction que les première et seconde unités de saillies d'alimentation, ladite première extrémité étant opposée à ladite seconde extrémité de sorte que ladite unité d'alimentation principale (312) et ladite première unité (314), ladite seconde unité (315) et ladite unité médiane (316) de saillies d'alimentation ont une forme de E ; et
des lignes d'alimentation enroulées sur le noyau d'alimentation,
**caractérisé en ce que**
lesdites lignes d'alimentation comprennent deux lignes d'alimentation comprenant une première ligne d'alimentation, gauche, (320a) et une seconde ligne d'alimentation, droite, (320b), agencées de telle sorte que
ladite première ligne d'alimentation, gauche, (320a) est enroulée sur la première extrémité, gauche, de l'unité d'alimentation principale (312) dans la direction de la longueur du noyau d'alimentation (310) adjacente à la première unité de saillies d'alimentation (314), et ladite seconde ligne d'alimentation, droite, (320b) est enroulée sur la seconde extrémité, droite, de l'unité d'alimentation principale (312) dans la direction de la longueur du noyau d'alimentation (310) adjacente à la seconde unité de saillies d'alimentation (315) ; et
ladite unité médiane de saillies d'alimentation (316) n'a pas de ligne d'alimentation enroulée sur celle-ci.

2. Dispositif d'alimentation de courant selon la revendication 1, dans lequel le noyau d'alimentation comprend une pluralité d'unités découpées parallèles à la direction de la largeur et par conséquent le noyau d'alimentation est divisé en une pluralité de parties de noyau.

3. Dispositif d'alimentation de courant selon la revendication 2, dans lequel l'épaisseur des unités découpées du noyau d'alimentation est plus grande que l'épaisseur des parties de noyau.

4. Système de transmission de puissance comprenant :
le dispositif d'alimentation de courant selon l'une quelconque des revendications 1 à 3, et un dispositif de collecte de courant comprenant :
un noyau de collecte (410) comprenant une unité de collecte principale (412) ayant une autre largeur prédéterminée dans une autre direction de la largeur et une autre longueur prédéterminée dans une autre direction de la longueur, et des unités de saillies de collecte (414, 415) faisant saillie dans la même direction à partir de l'unité de collecte principale (412) perpendiculaire à la fois à l'autre direction de ladite largeur et l'autre direction de ladite longueur de l'unité de collecte principale (412) au niveau d'une première extrémité, gauche, et d'une seconde extrémité, droite, de l'autre direction de la largeur, de sorte que l'unité de collecte principale (412) et les unités de saillies de collecte (414, 415) ont la forme d'un U inversé ; et
une ligne de collecte enroulée sur le noyau de collecte.

5. Système de transmission de puissance selon la revendication 4, dans lequel la ligne de collecte est enroulée sur les unités de saillies de collecte en saillie à l'extrémité gauche et à l'extrémité droite

6. Système de transmission de puissance selon la revendication 4, dans lequel le noyau de collecte comprend des unités de prolongement respectives (416, 417) s'étendant dans la direction de la largeur à partir des extrémités des unités de saillies de collecte respectives (414, 415).

7. Système de transmission de puissance selon la revendication 4, dans lequel le dispositif de collecte de courant est monté sur une partie inférieure d'une voiture.
